# EUROPEAN PATENT APPLICATION

(11) **EP 1 598 318 A1**
(43) Date of publication of application: **23.11.2005**
(21) Application number: 04711002.8
(22) Date of filing: 13.02.2004
(51) Int. Cl.: C02F 1/469, B01D 61/52

(54) **ELECTRIC DEIONIZATION APPARATUS AND METHOD OF OPERATING THE SAME**

(30) Priority: 14.02.2003 JP 2003036310; 21.02.2003 JP 2003043701
(71) Applicant: Kurita Water Industries Ltd., Shinjuku-ku, Tokyo 160-0023 (JP)
(72) Inventor: SATO, Shin, C/o Kurita Water Industries Ltd., Tokyo 1600023 (JP)
(74) Representative: Banzer, Hans-Jörg
(86) International application number: PCT/JP2004/001528
(87) International publication number: WO 2004/071968

(57) **Abstract**

An electrodeionization apparatus and a method for operating the apparatus are provided. With this, concentration diffusion of boron from a concentrating chamber can be suppressed to obtain product water having a very low boron concentration. Raw water in introduced into a desalting chamber 16, and product water is discharged from the desalting chamber 16. A part of the product water is introduced into a concentrating chamber 15 in a single pass in the direction opposite to the flow in the desalting chamber 16. Water discharged from the concentrating chamber 15 is drained out of a system. An inlet of the concentrating chamber 15 is provided at a side of an outlet for discharging product water from the desalting chamber 16, and an outlet of the concentrating chamber 15 is provided at a side of an inlet for introducing raw water into the desalting chamber 16. Concentrated water discharged from the concentrating chamber has a boron concentration of 500 times or less than that of the product water or of 10 ppb or less.

## Description

### Field of the Invention

The present invention relates to an electrodeionization apparatus for producing product water having a very low concentration of boron or for producing product water having a very low concentration of anions, and also relates to a method for operating the apparatus.

### Background of the Invention

Electrodeionization apparatuses are used in the field where deionized water and ultrapure deionized water are produced. A plate-and-frame type electrodeionization apparatus has an anode, a cathode, anion-exchange membranes, and cation-exchange membranes. The membranes are alternately arranged in such a manner as to alternately form concentrating chambers and desalting chambers (diluting chambers) between the anode and the cathode. The desalting chambers are filled with an ion exchanger such as ion-exchange resin. Water to be desalted flows through the desalting chambers, and ions in the water pass through the ion-exchange membranes to move from the desalting chambers to the concentrating chambers.

Japanese Unexamined Patent Application Publication No. 2002-205069 discloses a method for producing product water having very low concentrations of silica and boron. The product water is produced by introducing water containing silica or boron at a concentration lower than that of raw water into concentrating chambers at a side near outlets for discharging deionized water from desalting chambers, discharging concentrated water from the concentrating chambers at a side near inlets for introducing the raw water into the desalting chambers, and draining at least a part of the concentrated water discharged from the concentrating chambers out of a system.

In the patent document, product water of high quality can be obtained by using the concentrated water containing silica or boron at a concentration lower than that of the raw water and letting such water of good quality flow in the concentrating chambers from the side of the outlets for discharging the deionized water (product water) from the desalting chambers toward the side of the inlets for introducing the raw water into the desalting chambers. The silica or boron concentration of the resulting product water is significantly decreased.

### Summary of Invention

It is an object of the present invention to provide an electrodeionization apparatus and a method for operating an electrodeionization apparatus which can obtain product water having a very low concentration of boron by sufficiently controlling the concentration diffusion of boron from a concentrating chamber. It is also an object of the present invention to provide an electrodeionization apparatus and a method for operating an electrodeionization apparatus which can obtain product water having a very low concentration of carbonate by sufficiently controlling the concentration diffusion of anions such as carbonate ions from the concentrating chamber.

A method according to a first aspect of the present invention is for operating an electrodeionization apparatus which has at least one concentrating chamber and at least one desalting chamber isolated by ion-exchange membranes between an anode and a cathode. Concentrated water is introduced into the concentrating chamber. Raw water is introduced into the desalting chamber as water to be treated and is discharged as product water. The concentrated water discharged from the concentrating chamber has a boron concentration of 500 times or less than that in the product water or of 10 ppb or less.

An electrodeionization apparatus according a second aspect of the present invention has at least one concentrating chamber and at least one desalting chamber isolated by ion-exchange membranes between an anode and a cathode. Concentrated water is introduced into the concentrating chamber, and raw water is introduced into the desalting chamber as water to be treated and is discharged as product water. The concentrated water discharged from the concentrating chamber has a boron concentration of 500 times or less than that in the product water or of 10 ppb or less.

In the first and the second aspects, a boron concentration of the concentrated water discharged from the concentrating chamber is reduced in order to produce product water of high purity, having a very low boron concentration, for example, 0.1 ppb or less.

When a plurality of the desalting chambers and the concentrating chambers are provided along a flow direction of water to be treated, concentrated water discharged from the concentrating chamber of the downstreammost preferably has a boron concentration of 500 times or less than that in product water discharged from the desalting chamber of the downstreammost or of 10 ppb or less. With this, the boron concentration gradient from the concentrating chamber toward the desalting chamber at around the outlet of the concentrating chamber is also relatively reduced. Therefore, boron diffusion from the concentrating chamber to the desalting chamber can be controlled to reduce the boron concentration in the product water.

In the first and the second aspects, raw water introduced into the electrodeionization apparatus is preferably pretreated. In particular, it is desirable to perform an RO treatment after the removal of turbidity of raw water such as tap water by an MF membrane and the desalting by activated carbon. Furthermore, degassing treatment may be performed.

In particular, when a boron concentration of product water is 0.005 ppb or less, two-stage reverse osmosis (RO) is further desirably performed in order to reduce the load of feeding on the electrodeionization apparatus (for example, to 3 ppb or less).

The desalting chamber may be filled with an ion exchanger.

The electrical resistance of the concentrating chamber is increased by introducing water of high quality, having a low electrical conductivity and a high specific resistance, into the concentrating chamber. As a result, there is a possibility not to ensure a desirable current value. Therefore, the concentrating chamber may be also filled with an ion exchanger such as ion-exchange resin, activated carbon, or other electrically conductive material to ensure necessary current.

In a method for operating an electrodeionization apparatus according to a third aspect of the present invention, water to be treated is introduced into the desalting chamber, and concentrated water is introduced into the concentrating chamber. The concentrated water to be fed into the concentrating chamber is treated by an anion removing means to remove anions therefrom so as to have a low concentration of anions. The concentrated water is introduced into the concentrating chamber from a side near an outlet of the desalting chamber and is discharged from a side near an inlet of the desalting chamber.

An electrodeionization apparatus according to a fourth aspect of the present invention has at least one concentrating chamber and at least one desalting chamber isolated by ion-exchange membranes between an anode and a cathode. Water to be treated is introduced into the desalting chamber, and concentrated water is introduced into the concentrating chamber. The electrodeionization apparatus is provided with means for introducing and discharging the concentrated water so that the concentrated water is introduced into the concentrating chamber from a side near an outlet of the desalting chamber and is discharged from the concentrating chamber from a side near an inlet of the desalting chamber. Furthermore, the electrodeionization apparatus is provided with a means for removing anions from the concentrated water that is introduced into the concentrating chamber.

In the third and fourth aspects, the concentrated water supplied to the concentrating chamber has low concentrations of anions such as carbonate in order to produce product water of high purity, having an extremely low concentration of anions such as carbonate.

With this, the anion concentration gradient from the concentrating chamber toward the desalting chamber at around the outlet of the concentrating chamber is also relatively reduced. Therefore, carbonate diffusion from the concentrating chamber to the desalting chamber is controlled to reduce a carbonate concentration in product water.

In the third and fourth aspects, diffusion caused by the carbonate ion concentration gradient from the concentrating chamber toward the desalting chamber is suppressed by controlling the total inorganic carbonate concentration of the concentrated water introduced into the concentrating chamber to 50 ppb or less. Thus, the production of product water having an extremely low total inorganic carbonate concentration can be possible.

In the third and fourth aspects, similarly, diffusion caused by the ion concentration gradient from the concentrating chamber toward the desalting chamber is suppressed by controlling the silica concentration and boron concentration of the concentrated water introduced into the concentrating chamber to 100 ppb or less and 10 ppb or less, respectively. Thus, the production of product water having extremely low silica and boron concentrations can be possible.

A part of the product water that is discharged from the desalting chamber may be used as the concentrated water in order to decrease the total inorganic carbonate concentration, silica concentration, and boron concentration in the concentrated water that is introduced into the concentrated water. Furthermore, water to be supplied to the concentrating chamber may be treated by an ion-exchange unit and an electrodeionization unit.

A degassing means such as a degassing membrane unit may be used for decreasing the total inorganic carbonate concentration in the concentrated water that is introduced into the concentrating chamber.

In the third and fourth aspects, raw water may be introduced into the desalting chamber after the treatment for removing anions. The anion concentration in the product water can be further decreased. Reverse osmosis and degassing are preferable as the treatment for removing anions. Multistage reverse osmosis and the subsequent degassing are more preferable.

### Brief Description of the Drawings

Fig. 1 is a schematic cross-sectional view of an electrodeionization apparatus according to an embodiment.
Fig. 2 shows a water introducing channel of the electrodeionization apparatus shown in Fig. 1.
Fig. 3 shows a water introducing channel of an electrodeionization system according to another embodiment.
Fig. 4 shows a water introducing channel of an electrodeionization system according to further another embodiment.
Fig. 5 shows a water introducing channel of an electrodeionization system according to another different embodiment.
Fig. 6 shows a water introducing channel of an electrodeionization system according to an embodiment.
Fig. 7a is a perspective view schematically showing an electrodeionization apparatus according to another embodiment, and Fig. 7b is a water introducing channel of the same.
Fig. 8 is a schematic cross-sectional view of an electrodeionization apparatus according to an embodiment of a third aspect.
Fig. 9 is a water introducing channel of the electrodeionization apparatus of Fig. 8.
Fig. 10 is a water introducing channel of an electrodeionization system according to another embodiment.
Fig. 11 is a water introducing channel of an electrodeionization system according to further another embodiment.
Fig. 12 is a water introducing channel of an electrodeionization system according to another different embodiment.
Fig. 13 is a water introducing channel of an electrodeionization system according to an embodiment.
Fig. 14 is a water introducing channel of an electrodeionization system according to an embodiment.
Fig. 15 is a water introducing channel of an electrodeionization system according to an embodiment.
Fig. 16 is a water introducing channel of an electrodeionization system according to an embodiment.

### Detailed Description of the Preferred Embodiments

Preferred embodiments of the invention will now be described in detail with reference to the accompanying drawings.

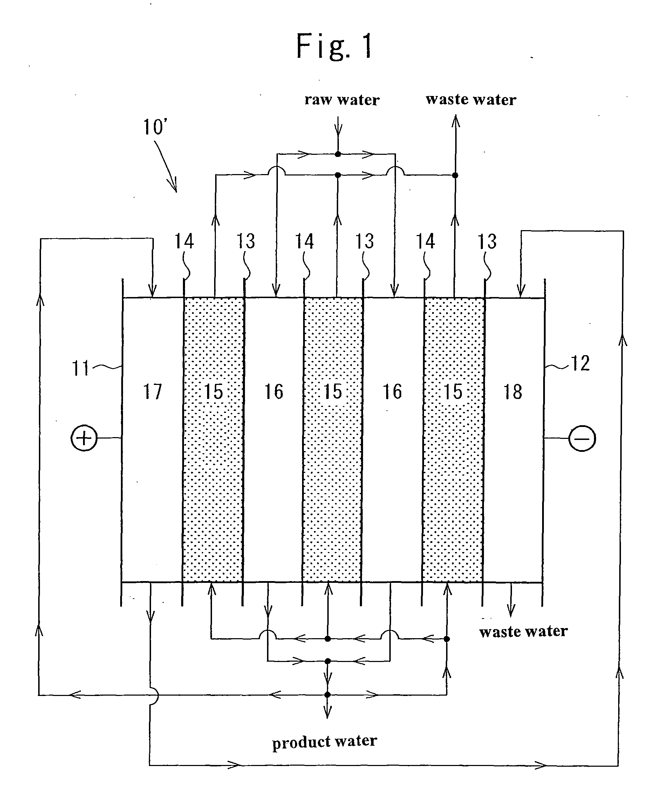

Fig. 1 is a schematic cross-sectional view of an electrodeionization apparatus 10' showing an example according to first and second aspects. The electrodeionization apparatus is formed by alternately arranging a plurality of anion-exchange membranes (A-membrane) 13 and cation-exchange membranes (C-membrane) 14 between electrodes (anode 11 and cathode 12) so that concentrating chambers 15 and desalting chambers 16 are alternately arranged. The desalting chambers 16 are filled with a mixture or layers of an anion exchanger and a cation exchanger, such as ion-exchange resin, ion-exchange fibers, and graft exchanger.

The concentrating chambers 15, an anode chamber 17, and cathode chamber 18 are also filled with an electrically conductive material such as an ion exchanger, activated carbon, or metal.

Raw water is introduced into the desalting chambers 16, and product water is discharged from the desalting chambers 16. A part of the product water is introduced to the concentrating chambers 15 in a single pass in the direction opposite to the flow in the desalting chambers 16, and is drained out of a system from the concentrating chambers 15. Namely, in the electrodeionization apparatus, the concentrating chambers 15 and the desalting chambers 16 are alternately arranged, inlets of the concentrating chambers 15 are disposed at the side where the product water is discharged from the desalting chambers 16, and outlets of the concentrating chambers 15 are disposed at the side where raw water is introduced into the desalting chambers 16. A part of the product water is supplied to an inlet of the anode chamber 17. The water discharged from the anode chamber 17 is supplied to an inlet of the cathode chamber 18. Then, the water is discharged out of the system as waste water from the cathode chamber 18.

As described above, by introducing the product water into the concentrating chambers 15 in a single pass in the direction opposite to the flow in the desalting chambers 16, the concentration of the concentrated water in the concentrating chambers 15 is the lowest at the side of outlets for discharging the product water to decrease influences of concentration diffusion on the desalting chambers 16; thus, a rate of removal of ions such as boron is greatly improved.

In this embodiment, since the electrical resistance of the electrodeionization apparatus is increased by introducing the product water into the concentrating chambers, the concentrating chambers are also filled with a conductive material such as an ion exchanger. Therefore, it is unnecessary to decrease the electrical resistance by adding an electrolyte such as sodium chloride to the concentrated water.

In the electrodeionization apparatus 10' shown in Fig. 1, the product water is introduced into the electrodes chambers 17 and 18 too. Preferably, the electrode chambers 17 and 18 are also filled with an ion exchanger, activated carbon, or electrically conductive metal in order to ensure desired current as in the concentrating chambers 15. This makes it possible to ensure current necessary for introducing water of high quality such as ultrapure deionized water.

Oxidizing agents such as chlorine and ozone are generated in the electrode chambers, in particular, in the anode chamber. Therefore, activated carbon is better than ion-exchange resin as the filler on a long-term base. It is desirable to supply the product water containing substantially no Cl⁻ to the electrode chambers as shown in Fig. 1 in order to avoid occurrence of chlorine and to stabilize the filler and the electrodes.

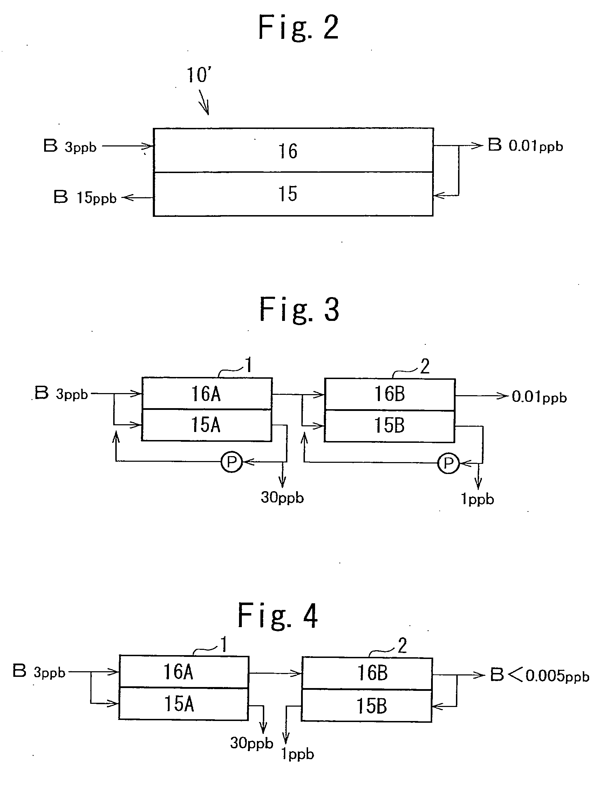

Fig. 2 simply shows a water introducing channel into the desalting chamber and the concentrating chamber of the electrodeionization apparatus 10' of Fig. 1. As shown in the drawing, raw water is introduced into the desalting chamber 16 to become product water. A part of the product water is introduced into the concentrating chamber 15, and is then drained as concentrated waste water. The direction of the water flow in the concentrating chamber is opposite (counter) to that in the desalting chambers 16.

It is possible to produce product water having a very low concentration of boron, for example, 0.1 ppb or less, and is further possible to produce product water having an extremely low concentration, 0.05 ppb or less, of boron by controlling boron content in the waste water to 500 times or less than that in the product water or to 10 ppb or less.

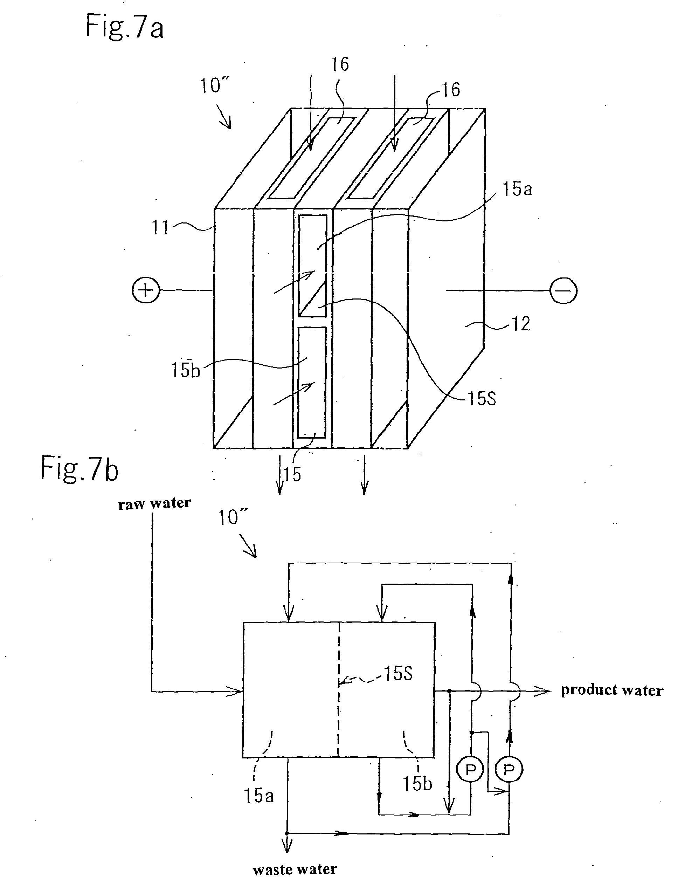

Fig. 7a is a perspective view schematically showing another electrodeionization apparatus 10" according to another embodiment of the second aspect. Fig. 7b shows a water introducing channel of the apparatus.

As shown in the drawing, the electrodeionization apparatus 10" has a structure which is formed by alternately arranging cation-exchange membranes and anion-exchange membranes between an anode 11 and a cathode 12 so that a concentrating chamber 15 and desalting chambers 16 are alternately arranged, like the electrodeionization apparatus 10' shown in Fig. 1. However, the concentrating chamber 15 of the electrodeionization apparatus 10 " is divided into two or more concentrated water flowing sections 15a and 15b (two in Figs. 7a and 7b) by a partition 15S. The direction of the concentrated water flow in the concentrated water flowing sections 15a and 15b crosses the direction of the water flow in the desalting chambers 16, unlike the electrodeionization apparatus 10' shown in Fig. 1.

Namely, in Figs. 7a and 7b, the desalting chambers 16 have inlets at the top side and outlets at the bottom side, and water flows in the desalting chambers 16 from top to bottom in Fig. 7a.

The partition 15S is provided in the concentrating chamber 15 so as to spread in a direction crossing the direction of the water flow in the desalting chambers 16 (two directions are orthogonal in Fig. 7a, but the term orthogonal direction should not been strictly interpreted here. The term orthogonal direction includes an angle range of about 80° to 100°.), and horizontally divides the inside of the concentrating chamber 15 into two stages in Fig. 7a. Water flows in each of the concentrated water flowing sections 15a and 15b from the front side to the rear side in Fig. 7a.

As shown in Fig. 7b, a part of the product water discharged from the desalting chambers 16 is introduced into a circulatory system of the concentrated water flowing section 15b, and a pump circulates the product water in the concentrated water flowing section 15b disposed at a side of an outlet for the product water. A part of the circulating concentrated water of the circulatory system is introduced into a circulatory system of the concentrated water flowing section 15a, and a pump circulates the concentrated water in the concentrated water flowing section 15a disposed at a side of an inlet for raw water. A part of the circulating concentrated water of the circulatory system of the concentrated water flowing section 15a is drained out of the system.

In the electrodeionization apparatus 10 " , the product water circulates in the concentrated water flowing section 15b disposed at the side of the outlet for the product water, then enters the concentrated water flowing section 15a disposed at the side of the inlet for raw water and circulates in it, and is then drained out of the system. As a result, the concentrated water is introduced from the side of the outlet for the product water toward the inlet for raw water, and then a part of the concentrated water is drained out of the system. Therefore, the electrodeionization apparatus 10" also exhibits the effects similar to those in the case of introducing water into the desalting chambers in a single pass as shown in Fig. 1.

The concentrating chamber may be divided by the partitions into three or more concentrated water flowing sections. Preferably, the concentrating chamber is divided into two or three concentrated water flowing sections from the viewpoints of an increase in the number of members by increasing the number of the partitions and an increase in complexity of the apparatus composition.

In the electrodeionization apparatus 10" as shown in Figs. 7a and 7b, it is also possible to produce product water having a very low concentration of boron, for example, 0.1 ppb or less, and is further possible to produce product water having an extremely low concentration of boron, 0.05 ppb or less, by controlling boron content in the concentrated waste water drained from the concentrated water flowing section 15b to 500 times or less than that in the product water or to 10 ppb or less.

It is possible to surely produce product water having a very low concentration of boron such as the above, and further possible to produce product water at an ultra-low concentration of 0.005 ppb or less by deionizing raw water in a multistage manner with the electrodeionization apparatuses installed in a multistage manner.

Figs. 3 to 6 show water introducing channels of electrodeionization systems provided with electrodeionization apparatuses in a multistage manner so that a first electrodeionization apparatus 1 and a second electrodeionization apparatus 2 are serially connected to each other. The apparatuses 1 and 2 may be either of the electrodeionization apparatus 10' or the electrodeionization apparatus 10 " .

In the electrodeionization system shown in Fig. 3, raw water having a boron concentration of 3 ppb is introduced into a desalting chamber 16A of the first electrodeionization apparatus 1, and becomes first product water having a boron concentration of 0.1 ppb. This first product water is introduced into both a desalting chamber 16B and a concentrating chamber 15B of the second electrodeionization apparatus 2. The direction of the concentrated water flow in concentrating chambers 15A and 15B is parallel to the direction of the flow in the desalting chambers 16A and 16B. Second product water (product water) having a boron concentration of 0.01 ppb is discharged from the desalting chamber 16B. Concentrated water discharged from the concentrating chamber 15B of the second electrodeionization apparatus 2 has a low boron concentration of 1 ppb. A part of the concentrated water is supplied to an inlet of the concentrating chamber 15B to be circulated, and the remaining part of the concentrated water is, for example, added to raw water.

Concentrated waste water discharged from the concentrating chamber 15A of the first electrodeionization apparatus 1 has a high boron concentration of 30 ppb. A part of the concentrated waste water is sent to an inlet of the concentrating chamber 15A, and the remaining part of the concentrated water is drained as concentrated waste water.

In the electrodeionization system shown in Fig. 4, all the first product water having a boron concentration of 0.1 ppb is introduced into the desalting chamber 16B of the second electrodeionization apparatus 2 from the desalting chamber 16A of the first electrodeionization apparatus 1, and becomes second product water having a boron concentration of 0.005 ppb or less. A part of the second product water is introduced into the concentrating chamber 15B to flow in the opposite direction manner. Second concentrated water having a boron concentration of 1 ppb is discharged from the concentrating chamber 15B and is, for example, added to raw water.

The raw water introduced into the concentrating chamber 15A of the first electrodeionization apparatus 1 flows in the parallel direction manner, and becomes first concentrated water having a boron concentration of 30 ppb to be drained.

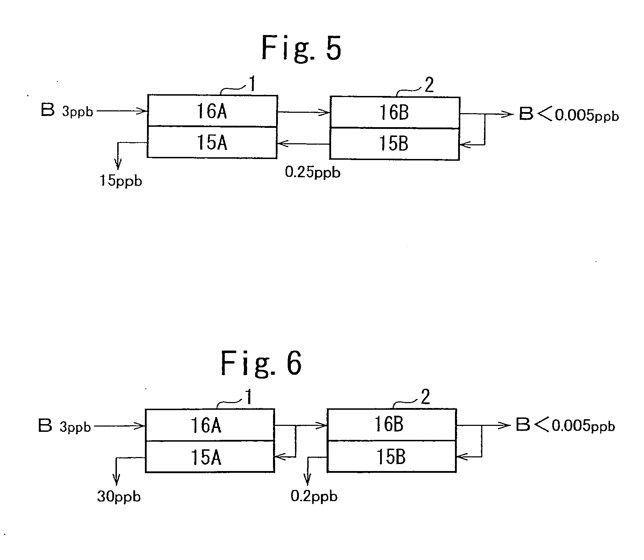

In the electrodeionization system shown in Fig. 5, all the raw water flows in the desalting chamber 16A and the desalting chamber 16B of the apparatus 1 in this order, and becomes second product water having a boron concentration of 0.005 ppb or less. The boron concentration of first product water discharged from the desalting chamber 16A is 0.05 ppb. A part of the second product water discharged from the desalting chamber 16B is introduced into the concentrating chamber 15B and then into the concentrating chamber 15A in the direction opposite to the flow in the desalting chambers, and then is drained as concentrated waste water with 15 ppb boron. The boron concentration of first concentrated water discharged from the concentrating chamber 15B is 0.25 ppb.

In the electrodeionization system shown in Fig. 6, all the raw water is supplied to the desalting chamber 16A, and becomes first product water having a boron concentration of 0.02 ppb. A part of the first product water is introduced into the concentrating chamber 15A in the flow direction opposite to the flow in the desalting chamber, and is then drained as concentrated waste water with 30 ppb boron. The remaining first product water is introduced into the desalting chamber 16B and becomes second product water having a boron concentration of 0.005 ppb or less. A part of the second product water is introduced into the concentrating chamber 15B in the flow direction opposite to the flow in the desalting chamber, and then is discharged as second concentrated water with 0.2 ppb boron. The second concentrated water is, for example, added to raw water.

With reference to Figs. 3 to 6, in the electrodeionization apparatuses installed in a multistage manner, when the desalting chamber of the first electrodeionization apparatus 1 has a thickness of 7 mm or more, in particular, 8 to 30 mm, and the desalting chamber of the second electrodeionization apparatus 2 has a thickness of less than 7 mm, in particular, 2 to 5 mm; weak electrolytes, such as silica and boron, and high-hardness components are removed in the first electrodeionization apparatus 1, and silica and boron are further removed in the second electrodeionization apparatus 2. Since the second electrodeionization apparatus 2 removes alkaline materials that are leaked from the first electrodeionization apparatus 1 of the previous stage, the treated water having a high quality can be obtained.

When the desalting chamber of the first electrodeionization apparatus 1 has a thickness of 7 mm or more, pH in the desalting chamber 16A of the apparatus 1 increases so that weak electrolytes, such as silica and boron, and high-hardness components are effectively removed.

In the above-mentioned embodiments, boron concentrations in the concentrating chambers disposed at the sides of outlets of the desalting chambers are decreased by supplying product water to the concentrating chambers. Boron-removed water may be supplied to the concentrating chambers, instead of the product water or in combination with the product water.

Boron can be removed by either a method using ion-exchange resin or boron-adsorbing resin or a method using a reverse osmosis membrane.

As described above, the electrodeionization apparatus and the method for operating the same according to the first and second aspects can surely produce product water having an extremely low concentration of boron.

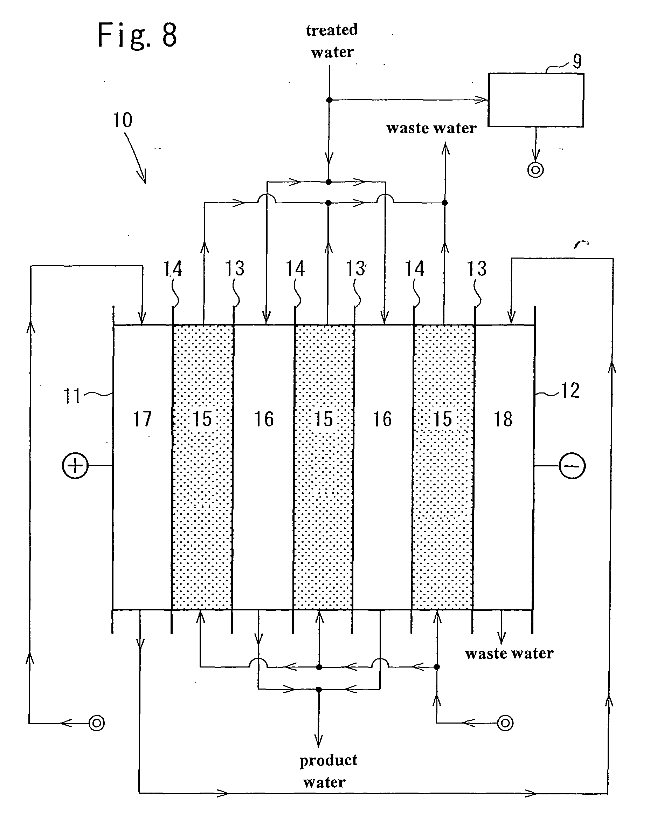

Fig. 8 is a schematic cross-sectional view of an electrodeionization apparatus 10 according to an embodiment of the third aspect of the present invention. The electrodeionization apparatus 10 is formed by alternately arranging a plurality of anion-exchange membranes (A-membrane) 13 and cation-exchange membranes (C-membrane) 14 between electrodes (anode 11 and cathode 12) so that concentrating chambers 15 and desalting chambers 16 are alternately arranged. The desalting chambers 16 are filled with a mixture or layers of an anion exchanger and a cation exchanger, such as ion-exchange resin, ion-exchange fibers, and graft exchanger.

The concentrating chambers 15, an anode chamber 17, and a cathode chamber 18 are also filled with an electrically conductive material such as an ion exchanger, activated carbon, or metal.

Water to be treated is introduced into the desalting chambers 16, and product water is discharged from the desalting chambers 16. A part of the water to be treated is sent to an anion-removing means 9, and anions in the water are removed. The water treated by the anion-removing means 9 is introduced into the concentrating chambers 15 in a single pass in the direction opposite to the flow in the desalting chambers 16, and is then drained out of a system from the concentrating chambers 15. In this electrodeionization apparatus, the concentrating chambers 15 and the desalting chambers 16 are alternately arranged in parallel to each other. Inlets of the concentrating chambers 15 are provided at a side of outlets for discharging product water from the desalting chambers 16, and outlets of the concentrating chambers 15 are provided at a side of inlets for introducing raw water into the desalting chambers 16. Therefore, concentrated water is introduced into the concentrating chambers 15 from the side of the outlets of the desalting chambers (the under side in Fig. 8) and is discharged from the side of the inlets of the desalting chambers (the upper side in Fig. 8).

A part of the water discharged from the anion-removing means 9 is supplied to an inlet of the anode chamber 17. The water discharged from the anode chamber 17 is supplied to an inlet of the cathode chamber 18. Then, the water discharged from the cathode chamber 18 is drained out of the system as waste water. Water to be treated may be supplied to the inlet of the anode chamber 17 instead of the water discharged from the anion-removing means.

As described above, by introducing the water treated by the anion-removing means into the concentrating chambers 15 in a single pass in the direction opposite to the flow in the desalting chambers 16, the concentration of the concentrated water in the concentrating chambers 15 is the lowest at the side for discharging the product water. As a result, influences of concentration diffusion on the desalting chambers 16 are decreased. Thus, rates of removal of weak anions, such as carbonate, silica, and boron, in addition to strong anions can be greatly improved. With this electrodeionization apparatus, product water having a resistivity of 18 MΩ·cm or more can be produced.

When the electrical conductivity of water introduced into the concentrating chamber is low by the anion-removing treatment and the electrical resistance of the electrodeionization apparatus is high, the concentrating chamber is filled with a conductive material such as an ion exchanger. Therefore, it is unnecessary to decrease the electrical resistance of the concentrated water by adding an electrolyte such as sodium chloride. Preferably, the electrode chambers 17 and 18 are also filled with an ion exchanger, activated carbon, or electrically conductive metal in order to ensure desired current. This makes it possible to ensure current necessary for introducing water with high quality, such as ultrapure deionized water.

Oxidizing agents such as chlorine and ozone are generated in the electrode chambers, in particular, in the anode chamber. Therefore, activated carbon is better than ion-exchange resin as the filler on a long-term basis. It is desirable to supply the product water to the electrode chambers as shown in Fig. 8. Since the product water scarcely contains Cl⁻, no chlorine is generated and the filler and the electrodes are stable over a long period of time.

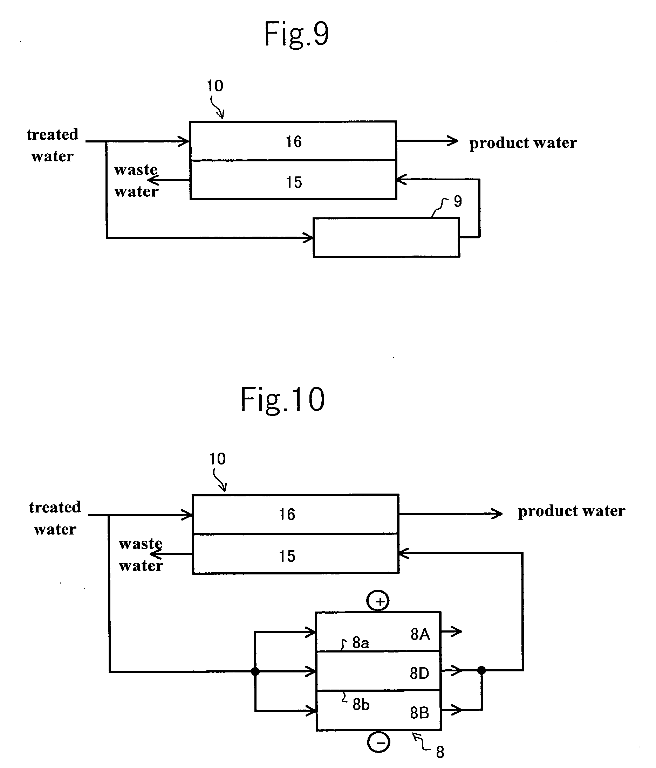

Fig. 9 simply shows a water introducing channel into the desalting chamber and the concentrating chamber of the electrodeionization apparatus of Fig. 8. As shown in the drawing, water to be treated is introduced into the desalting chamber 16 to become product water. A part of the water to be treated is treated for removing anions, and is then introduced into the concentrating chamber 15. The water introduced into the concentrating chamber 15 is then drained as concentrated waste water. The direction of the water flow in the concentrating chamber is opposite (counter) to that in the desalting chambers 16.

With the anion-removing means 9, the total inorganic carbonate concentration is controlled to 50 ppb or less, preferably, to 30 ppb or less. As a result, the total inorganic carbonate concentration in the product water is extremely decreased. Furthermore, with the anion-removing means 9, silica concentration is controlled to 100 ppb or less, preferably, to 80 ppb or less, and boron concentration is controlled to 10 ppb or less, preferably, to 8 ppb or less. As a result, the silica concentration and the boron concentration in the product water are extremely decreased.

Examples of the anion-removing means 9 include degassers such as degassing membranes, decarbonation columns, and vacuum degassing columns; reverse osmosis membrane separation units; electrodialysers; ion-exchange units such as ion-exchange resin columns including anion exchangers; and electrodeionization units.

It is desirable for removing carbonate to include degassing means such as a degassing membrane, a decarbonation column, or a vacuum degassing column. In particular, a degassing-membrane unit for performing a vacuum suction (for example, 20 Torr or more), a sweeping with nitrogen, or a combination thereof is superior in efficiency of removing carbonate.

Fig. 10 shows an example of a channel when an electrodeionization unit 8 is used as the anion-removing means 9. The electrodeionization unit 8 is formed by arranging an anion membrane 8a and a cation membrane 8c between an anode and a cathode so that a desalting chamber 8D and concentrating chambers 8A and 8B are formed. Water to be treated is introduced into chambers 8A, 8B, and 8D to flow parallel to each other. Desalted water from the desalting chamber 8D and concentrated water from the concentrating chamber 8B are supplied to the concentrating water 15 of the electrodeionization apparatus 10 at a side of an outlet of the desalting chamber, and are then discharged from a side of an inlet of the desalting chamber. The electrodeionization unit 8 is provided with the concentrating chamber 8A disposed at a side of the anion membrane 8a of the desalting chamber 8D and the concentrating chamber 8B disposed at a side of cation membrane 8c. Only concentrated anion components are discharged into the concentrating chamber 8A, and concentrated cations from the concentrating chamber 8B and desalted water from the desalting chamber 8D are supplied to the concentrating chamber 15 of the electrodeionization apparatus 10. In such a manner, the electrodeionization unit 8 removes and decreases anion components only.

In the present invention, anion-removed water may be supplied to the desalting chamber as the water to be treated. With this, since anion load on the desalting chamber is decreased, the weak anion concentration in the product water can be further decreased. Degassing treatment and reverse osmosis treatment are preferable for removing these anions. Adsorptive removal of organic components by activated carbon and ionization of chlorine are also preferable.

When carbonate ions are removed from the water to be introduced into the desalting chamber by anion-removing treatment, a degassing means (in particular, a membrane degassing unit) is most preferably used as a means for removing anions. A part of the degassed water is preferably recirculated from the inlet of the degassing unit so that the efficiency of removing carbonate is increased.

In the degassing treatment for removing carbonate, the efficiency of removing carbonate is desirably increased by controlling the introduced water to be acidic, preferably, to have a pH of 4 to 6, more preferably, a pH of 4 to 5.

In the aspiration of gas with a vacuum pump through a degassing membrane, it is desirable to control the degree of vacuum at 50 Torr or less, more preferably, 20 Torr or less to increase the efficiency of removing carbonate.

In the reverse osmosis treatment (RO treatment) of raw water, it is desirable to sufficiently decrease the weak anion components such as carbonate, silica, and boron by conducting multistage treatment, for example, two-stage treatment.

In this case, the efficiency of removing the weak anion components is improved by using alkaline water (a pH of 8 to 10) to the RO of a first and/or a second stage.

The alkalinity may be produced by using an electrodeionization unit including a desalting chamber having a thickness of 7 mm or more (preferably 15 mm) and being filled with an ion exchanger of a mixture of anions and cations, as disclosed in Japanese Unexamined Patent Application Publication No. 2001-113281. This can not only produce the alkalinity, but also reduce the weak anion components. Such electrodeionization unit is desirably disposed between the RO units of the first and the second stages.

The pretreatment including the two-stage RO treatment and degassing treatment is particularly preferable to obtain ultrapure water of extremely high purity, for example, treated water having a specific resistance of 18.2 MΩ·cm or more, a silica concentration of 0.05 ppb or less, and a boron concentration of 0.005 ppb or less.

Figs. 4 to 7 show configuration examples in which the above-mentioned pretreatment unit is located anterior to the electrodeionization apparatus 10.

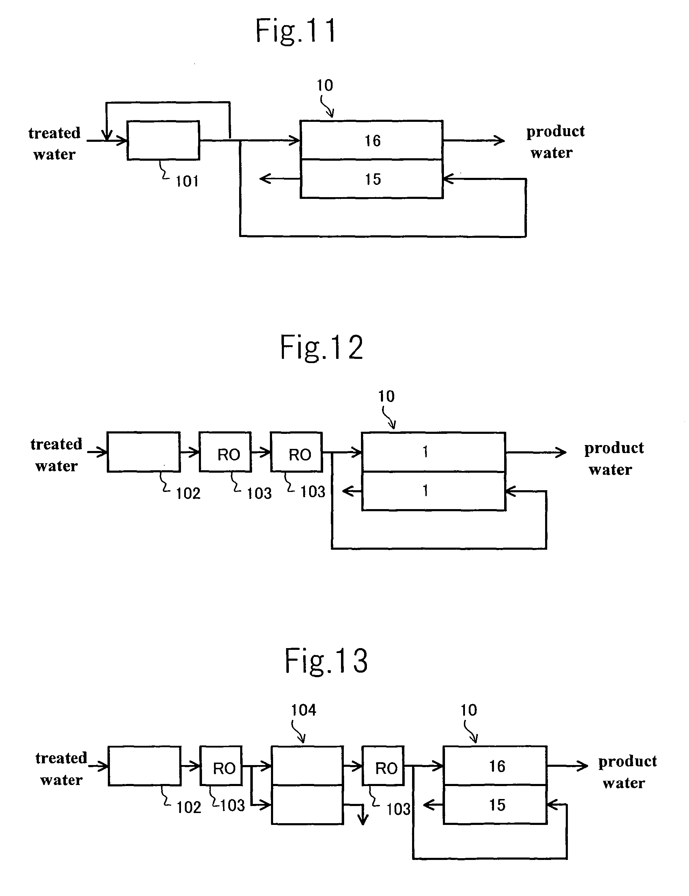

With reference to Fig. 11, raw water is degassed by a degassing membrane unit 101 as a pretreatment unit, and is then sent to the electrodeionization apparatus 10 as the water to be treated. A part of the water treated by the degassing membrane unit 101 is resent to the upstream side of the unit 101 and is repeatedly treated.

With reference to Fig. 12, raw water is introduced to pretreatment, i.e. into an activated carbon adsorption column 102 and two-stage RO units 103, and is then used as the water to be treated.

With reference to Fig. 13, raw water is treated with an activated carbon adsorption column 102, a first RO unit 103, an electrodeionization unit 104, and a second RO unit 103; and is sent to the electrodeionization apparatus 10 as the water to be treated. The electrodeionization unit 104 may be an electrodeionization apparatus, for example, disclosed in Japanese Unexamined Patent Application Publication No. 2001-113281, but is not limited to.

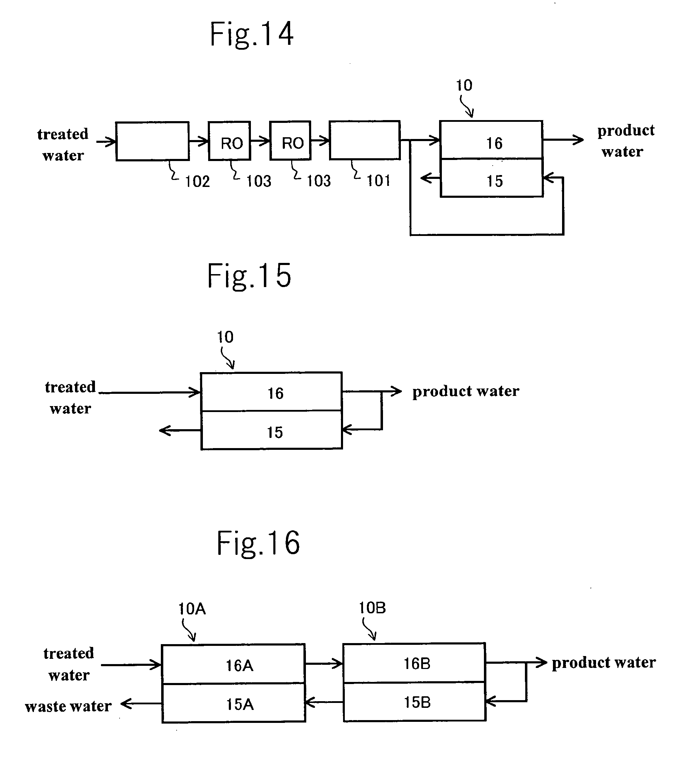

With reference to Fig. 14, raw water is treated with an activated carbon adsorption column 102, two-stage RO units 103, and a degassing membrane unit 101; and is then sent to the electrodeionization apparatus 10 as the water to be treated.

In the present invention, the means for removing anions from concentrated water supplied to the concentrating chamber may be the electrodeionization apparatus 10 itself. Namely, as shown in Fig. 15, all the water to be treated may be introduced into the desalting chamber 16 of the electrodeionization apparatus 10, and a part of product water may be introduced into the concentrating chambers 15 from a side of the outlet of the desalting chamber toward a side of the inlet of the desalting chamber.

In the present invention, the electrodeionization apparatuses 10 may be installed in a multistage manner, and raw water may be deionized in a multistage manner.

Fig. 16 is a water introducing channel of an electrodeionization system including electrodeionization apparatuses 10A and 10B having the same structure as that of the electrodeionization apparatus 10 in a multistage manner. The first electrodeionization apparatus 10A and the second electrodeionization apparatus 10B are serially connected to each other.

In the electrodeionization system of Fig. 16, water to be treated is introduced into a desalting chamber 16 of the first electrodeionization apparatus 10A to become first product water. This first product water is introduced into a desalting chamber 16B of the second electrodeionization apparatus 10B. The flow direction of concentrated water in concentrating chambers 15A and 15B is opposite to the flow direction in the desalting chambers 16A and 16B. Second product water (product water) is discharged from the desalting chamber 16B, and a part of the second product water is supplied to the concentrating chamber 15B. The concentrated water discharged from the concentrating chamber 15B of the second electrodeionization apparatus 2 has a low anion concentration, and is supplied to the concentrating chamber 15A.

Water discharged from the concentrating chamber 15A of the first electrodeionization apparatus 1 is drained as concentrated waste water.

In the third and fourth aspects of the present invention, preferably, the desalting chamber has a thickness of 2 to 7 mm, and a flow velocity is 60 to 120 m/h in the terms of LV and 100 to 200 /h in the terms of SV. Preferably, the concentrating chamber has a thickness of 2 to 7 mm, and a flow velocity is 10 to 30 m/h in the terms of LV and 25 to 50 /h in the terms of SV. Preferably, both the desalting chamber and the concentrating chamber are filled with an ion exchanger, in particular, with a mixture of anions and cations; and are operated at a current density of 300 to 700 mA/dm². Water supplied to the concentrating chamber is not recirculated to the inlet of the concentrating chamber with a circulation pump, but the concentrating chamber desirably runs with the water in a single pass.

As shown in Fig. 16, when water is serially introduced into a plurality of desalting chambers, in particular, the desalting chamber at the last stage preferably has a thickness of 2 to 7 mm, and a flow velocity is preferably 60 to 120 m/h in the terms of LV and 100 to 200 /h in the terms of SV.

As mentioned above, the electrodeionization apparatus and the method for operating the apparatus according to the present invention can surely produce product water having extremely low concentrations of anions, in particular, of total inorganic carbonate.

## Claims

1. A method for operating an electrodeionization apparatus comprising at least one concentrating chamber and at least one desalting chamber isolated by ion-exchange membranes between an anode and a cathode,
wherein concentrated water is introduced into the concentrating chamber; and raw water is introduced into the desalting chamber as water to be treated and is discharged from the desalting chamber as product water, and
wherein the concentrated water discharged from the concentrating chamber has a boron concentration of 500 times or less than that in the product water or of 10 ppb or less.

2. The method for operating the electrodeionization apparatus according to claim 1, wherein a plurality of concentrating chambers and desalting chambers are provided along a flow direction of water to be treated; and concentrated water discharged from the concentrating chamber of the downstreammost in the flow direction of the water to be treated has a boron concentration of 500 times or less than that in product water discharged from the desalting chamber of the downstreammost or of 10 ppb or less.

3. The method for operating the electrodeionization apparatus according to claim 1, wherein a part of the product water is supplied to the concentrating chamber.

4. The method for operating the electrodeionization apparatus according to claim 1, wherein the concentrated water is supplied to the concentrating chamber from a side near an outlet of the desalting chamber and is discharged from a side near an inlet of the desalting chamber.

5. An electrodeionization apparatus comprising at least one concentrating chamber and at least one desalting chamber isolated by ion-exchange membranes between an anode and a cathode, wherein concentrated water is introduced into the concentrating chamber; and raw water is introduced into the desalting chamber as water to be treated and is discharged as product water,
wherein the electrodeionization apparatus further comprises a means for controlling a boron concentration of the concentrated water discharged from the concentrating chamber to 500 times or less than that in the product water or to 10 ppb or less.

6. The electrodeionization apparatus according to claim 5,
wherein a plurality of desalting chambers are serially arranged; and concentrated water discharged from the concentrating chamber separated from the last desalting chamber via an ion-exchange membrane has a boron concentration of 500 times or less than that in product water discharged from the last desalting chamber or of 10 ppb or less.

7. The electrodeionization apparatus according to claim 5,
wherein the concentrated water is supplied to the concentrating chamber at a side near an outlet of the desalting chamber and is discharged from a side near an inlet of the desalting chamber.

8. The electrodeionization apparatus according to claim 5 further comprising a means for introducing a part of the product water into the concentrating chamber as concentrated water.

9. The electrodeionization apparatus according to claim 5 further comprising a means for removing boron from the water supplied to the concentrating chamber.

10. A method for operating an electrodeionization apparatus having at least one concentrating chamber and at least one desalting chamber isolated by ion-exchange membranes between an anode and a cathode,
wherein water to be treated is introduced into the desalting chamber; and concentrated water is introduced into the concentrating chamber,
wherein said concentrated water to be fed to the concentrating chamber is treated with a means for removing anions so as to have a low anion concentration, and
wherein the concentrated water flows through the concentrating chamber such that the concentrated water is introduced into the concentrating chamber from a side near an outlet of the desalting chamber and is discharged from a side near an inlet of the desalting chamber.

11. The method for operating the electrodeionization apparatus according to claim 10, wherein the concentrated water introduced into the concentrating chamber is treated with the means for removing anions so as to have a total inorganic carbonate concentration of 50 ppb or less.

12. The method for operating the electrodeionization apparatus according to claim 10, wherein the concentrated water introduced into the concentrating chamber is treated with the means for removing anions has a silica concentration of 100 ppb or less.

13. The method for operating the electrodeionization apparatus according to claim 10, wherein the concentrated water introduced into the concentrating chamber is treated with the means for removing anions has a boron concentration of 10 ppb or less.

14. The method for operating the electrodeionization apparatus according to claim 10, wherein a part of the product water discharged from the desalting chamber is supplied to the concentrating chamber.

15. The method for operating the electrodeionization apparatus according to claim 10, wherein the means for removing anions comprises a degassing means.

16. The method for operating the electrodeionization apparatus according to claim 10, wherein the means for removing anions comprises an ion-exchange unit or an electrodeionization unit.

17. The method for operating the electrodeionization apparatus according to claim 10, wherein raw water is treated so as to remove anions therefrom, and then is supplied to the desalting chamber as water to be treated.

18. The method for operating the electrodeionization apparatus according to claim 17, wherein anions in the raw water are removed by reverse osmosis treatment and degassing treatment.

19. An electrodeionization apparatus comprising at least one concentrating chamber and at least one desalting chamber isolated by ion-exchange membranes between an anode and a cathode, wherein water to be treated is introduced into the desalting chamber, and concentrated water is introduced into the concentrating chamber, the electrodeionization apparatus further comprising:
a means for introducing the concentrated water and a means for discharging the concentrated water so as to introduce the concentrated water into the concentrating chamber from a side near an outlet of the desalting chamber and to discharge the same from a side near an inlet of the desalting chamber; and
a means for removing anions from the concentrated water introduced into the concentrating chamber.

20. The electrodeionization apparatus according to claim 19, wherein the means for removing anions controls a total inorganic carbonate concentration after the anion-removing treatment to 50 ppb or less.

21. The electrodeionization apparatus according to claim 19 further comprising a means for removing anions from water supplied to the desalting chamber.
